Europäisches Patentamt

European Patent Office

Office européen des brevets

(11) Veröffentlichungsnummer: **0 279 053 B1**

# (12) EUROPÄISCHE PATENTSCHRIFT

(45) Veröffentlichungstag der Patentschrift: **10.04.91**

(51) Int. Cl.⁵: **H04N 7/12**

(21) Anmeldenummer: **87118379.4**

(22) Anmeldetag: **11.12.87**

(54) **Verfahren zum Übertragen und zum Wiedergeben von Fernsehbildsequenzen.**

(30) Priorität: **16.02.87 DE 3704777**

(43) Veröffentlichungstag der Anmeldung:
**24.08.88 Patentblatt 88/34**

(45) Bekanntmachung des Hinweises auf die
Patenterteilung:
**10.04.91 Patentblatt 91/15**

(84) Benannte Vertragsstaaten:
**DE FR GB IT NL**

(56) Entgegenhaltungen:
**DE-A- 2 062 922**
**DE-A- 2 336 857**
**DE-A- 3 133 714**

(73) Patentinhaber: **ANT Nachrichtentechnik GmbH**
**Gerberstrasse 33**
**W-7150 Backnang(DE)**

(72) Erfinder: **Grotz, Karlheinz, Dipl.-Ing.**
**Wilhelmstrasse 25**
**W-7012 Fellbach(DE)**
Erfinder: **Mayer, Jörg, Dipl.-Ing.**
**Obere Waiblinger Strasse 120**
**W-7000 Stuttgart 50(DE)**
Erfinder: **Reuter, Franz-Josef, Dipl.-Ing.**
**Stresemannstrasse 22/5**
**W-72150 Backnang(DE)**
Erfinder: **Süssmeier, Georg, Dipl.-Ing.**
**Hohenheimer Strasse 19**
**W-7150 Backnang(DE)**

## Beschreibung

Die Erfindung geht aus von einem Verfahren gemäß dem Oberbegriff des Patentanspruchs 1. Ein solches Verfahren ist bekannt aus EP-A-0 154 126. Ein anderes Verfahren ist in der älteren EP-Patentanmeldung EP-A-236 519 vorgeschlagen worden.

Wenn Fernsehbildsequenzen, insbesondere solche mit erhöhter Auflösungsqualität, über einen Übertragungskanal mit begrenzter Übertragungskapazität übertragen werden sollen, ist es möglich, senderseitig vorhandene Fernsehbildsequenzen bei der Übertragung auszulassen und die ausgelassenen Bildsequenzen empfängerseitig aus zwei benachbarten übertragenen zu interpolieren. Diese Methode führt zu einer unzulänglichen Rekonstruktion bewegter Bildbereiche. Es tritt eine Mehrfachdarstellung bewegter Bildbereiche auf, was zu ruckartigen Bewegungsabläufen bei der Wiedergabe führt.

In der älteren EP-A-0 236 519 wurde zur Vermeidung dieses Nachteils vorgeschlagen, mittels eines Interpolationsfilters jedes Bildelement einer ausgelassenen Fernsehbildsequenz mittels eines Verschiebungsvektors für jeden Bildpunkt und je einem Bildelement aus zwei übertragenen Fernsehbildsequenzen zu interpolieren. Der Iterationsprozess zur Ermittlung des Verschiebungsvektors wurde dabei bewegungsabhängig gesteuert.

Aufgabe der Erfindung ist es, das Verfahren gemäß dem Oberbegriff des Patentanspruchs 1 so auszugestalten, daß der Verarbeitungsaufwand bei einer Datenreduktion gering bleibt, ohne eine Qualitätsminderung insbesondere in schnell bewegten Bildbereichen befürchten zu müssen. Diese Aufgabe wird durch die Merkmale des Patentanspruchs 1 gelöst. Ausgestaltungen der Erfindung sind in den Unteransprüchen beschrieben.

Die Erfindung geht von folgenden Erkenntnissen aus:

Bisher (EP-A-0 154 126; EP-A-236 519) wurde der Verschiebungsvektor für jeden Bildpunkt einer Fernsehbildsequenz (Halbbild bei Zeilensprungverfahren oder Vollbild bei progressiver Abtastung) ermittelt. Abgesehen von dem sehr hohen Verarbeitungsaufwand spart man damit keine Übertragungskapazität. Es wurde nun durch statistische Untersuchungen ermittelt, daß Verschiebungen (Displacements) benachbarter Bildpunkte über einen großen Bereich die gleichen Werte haben. Dies läßt sich anschaulich mit der Tatsache belegen, daß Objekte eine bestimmte Ausdehnung haben müssen, um im Bild erkannt zu werden. Ermittelt man demnach eine Verschiebung nicht für einen einzelnen Bildpunkt sondern für einen Teilbildbereich (Block), beispielseise der Größe 9 x 7 Bildpunkte, so läßt sich der Aufwand (Rechenleistung) bei der Ermittlung der Verschiebung um den Faktor 63 reduzieren.

Bisherige Verfahren basierten darauf, eine bei der Übertragung ausgelassene Fernsehbildsequenz aus mindestens zwei übertragenen Fernsehbildern und gegebenenfalls einer Zusatzinformation zu rekonstruieren (interpolieren). Beim Verfahren gemäß der Erfindung hingegen wird eine beim Übertragen ausgelassene Fernsehbildsequenz aus einer zuvor übertragenen Fernsehbildsequenz und aus einer übertragenen Information über die Verschiebung eines Teilbildbereiches einer beim Übertragen ausgelassenen Fernsehbildsequenz bezogen auf eine übertragene Fernsehbildsequenz rekonstruiert. Es erfolgt somit keine Interpolation zwischen zwei oder mehreren übertragenen Fernsehbildsequenzen, sondern eine Rekonstruktion aus nur einer zuvor gesendeten Fernsehbildsequenz in Zusammenhang mit einer Verschiebungsinformation (Forward displacement estimation). Durch diese Maßnahme reduziert sich der Bildspeicherbedarf sender- und empfängerseitig erhablich.

Für Teilbildbereiche, für die wegen des hohen Bewegungsanteils keine Verschiebungsinformation ermittelt werden kann, werden bildpunktabhängige Informationen für diesen Teilbildbereich in den übertragenen Datenstrom eingefügt. Es erfolgt also für bewegte Bildbereiche eine Wiedergabe mit der vollen zeitlichen Auflösung.

Das Verfahren nach der Erfindung ist unter anderem für folgende Anwendungen geeignet:

- Hochqualitätsfernsehen mit 34 Mbit/s basierend auf CCIR Rec. 601,
- HDTV (High density television) -Übertragung auf 140 Mbit/s-Übertragungskanälen,
- niederbitratige Videokonferenzbildübertragung (2 Mbit/s, 384 kbit/s, 64 kbit/s),
- Bildrekonstruktion für ruckfreie Zeitlupe,
- Stabilisierung verwackelter Bildsequenzen (z.B. wenn die Aufnahmekamera nicht feststehen kann),
- Bewegungskompensation von Objekten (z.B. Zellen unter dem Mikroskop),
- Flimmerbefreiung der Wiedergabe von Fernsehbildern (Vollbilddarstellung),
- Normwandlung zwischen unterschiedlichen Bildwechselfrequenzen.

Anand der Zeichnungen wird ein Ausführungsbeispiel der Erfindung nun erläutert. Es zeigen

Fig. 1     das Prinzip der Rekonstruktion ausgelassener Fernsehbildsequenzen,
Fig. 2     das Prinzip der Ermittlung von Verschiebungsvektoren für Teilbildbereiche,
Fig. 3     ein Blockschaltbild für einen Coder nach dem Verfahren der Erfindung,

Fig. 4    ein Blockschaltbild für einen Displacement-Schätzer,
Fig. 5    die Displacements für ein Feld von Teilbildbereichen,
Fig. 6    die DPCM-Implementierung des DPCM-Coders,
Fig. 7    die Quantisierung und VWL-Codierung,
Fig. 8    ein Blockschaltbild für die Baugruppen des Decoders,
Fig. 9    die Struktur des VWL-Decoders,
Fig. 10    die Struktur des DPCM-Luminanz-Decoders,
Fig. 11    die Struktur des Displacement-Interpolators,
Fig. 12    die Struktur des Interpolation-Buffers,
Fig. 13    bis 16 Strukturelemente des Interpolationsfilters.

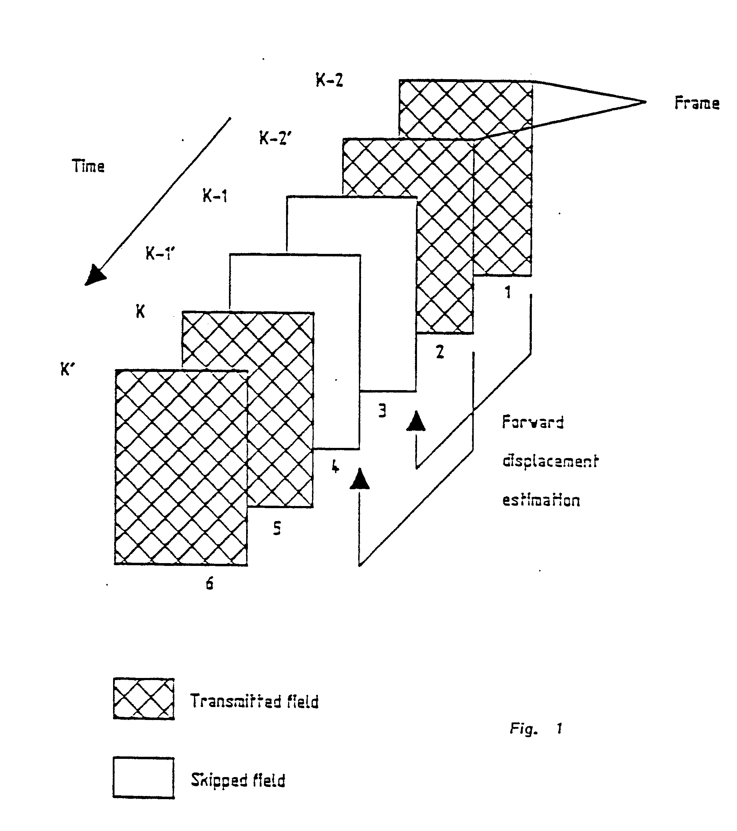

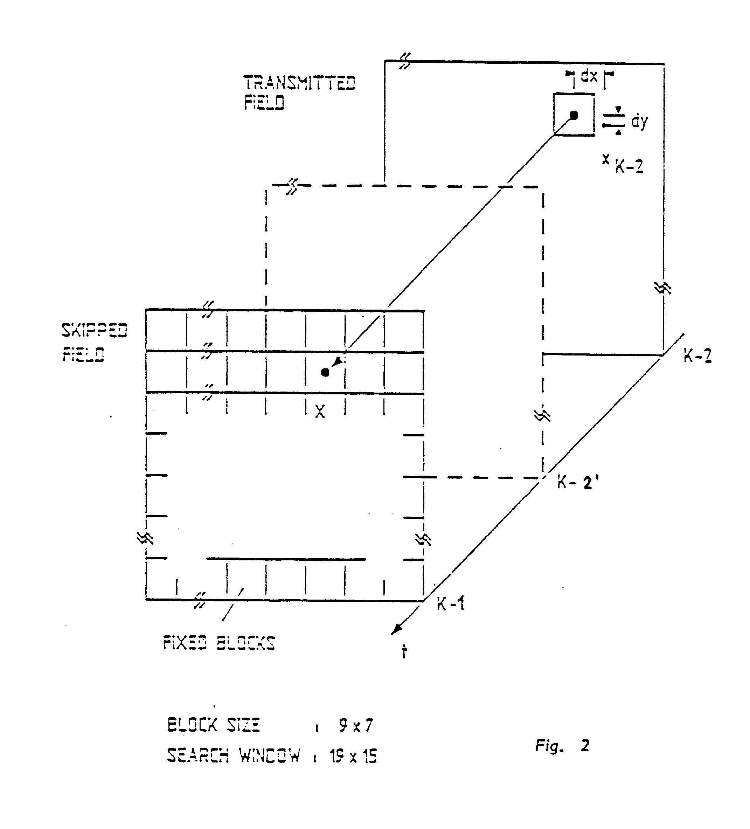

In Fig. 1 ist das Prinzip der Rekonstruktion von Fernsehbildsequenzen nach der Erfindung dargestellt. Es wurde hierbei vom Zeilen-Sprungverfahren - Übertragung zweier Halbbilder (field) zum Aufbau eines Vollbildes (frame) - ausgegangen. Eine progressive zeitliche Abtastung zur Übertragung eines Vollbildes ist mit dem Verfahren der Erfindung natürlich auch möglich. Die beiden Halbbilder K-2 und K-2' werden beispielsweise in digital codierter Form mittels DPCM übertragen (transmitted fields). Die Halbbilder K-1 und K-1' werden nicht übertragen (skipped fields). Die Halbbilder K und K' werden wiederum übertragen. Die ausgelassenen Halbbilder sind empfängerseitig rekonstruierbar. So wird beispielsweise das nicht übertragene Halbbild K-1 aus dem übertragenen Halbbild K-2 und einem übertragenen Signal rekonstruiert, welches eine Information über die Verschiebung zwischen den Bildsequenzen K-2 und K-1 enthält. Es wird ein Feld von Verschiebungsvektoren (Displacements) berechnet (Fig. 2). Die Verschiebungsvektoren werden aus den zuvor genannten Gründen nicht bildpunktweise ermittelt, sondern jeweils für einen Teilbildbereich (Block).

Figur 2 zeigt die Unterteilung einer Bildsequenz in Teilbildbereiche gleicher Größe (Fixed blocks). Der eingezeichnete Verschiebungsvektor gibt die Verschiebung des Bildinhalts eines Blockes von der Bildsequenz K-2 zur Bildsequenz K-1 an. Die Größe eines Teilbildbereiches (Block size) wird vorzugsweise durch 9 x 7 Bildpunkte bei einem Schätzfenster der Größe 19 x 15 Bildpunkte beschrieben. Aus den Verschiebungskomponenten dx und dy des Verschiebungsvektors läßt sich Betrag und Winkel der Bewegungsrichtung des Bildinhalts der Teilbildbereiche durch einfache Koordinatentransformation ermitteln.

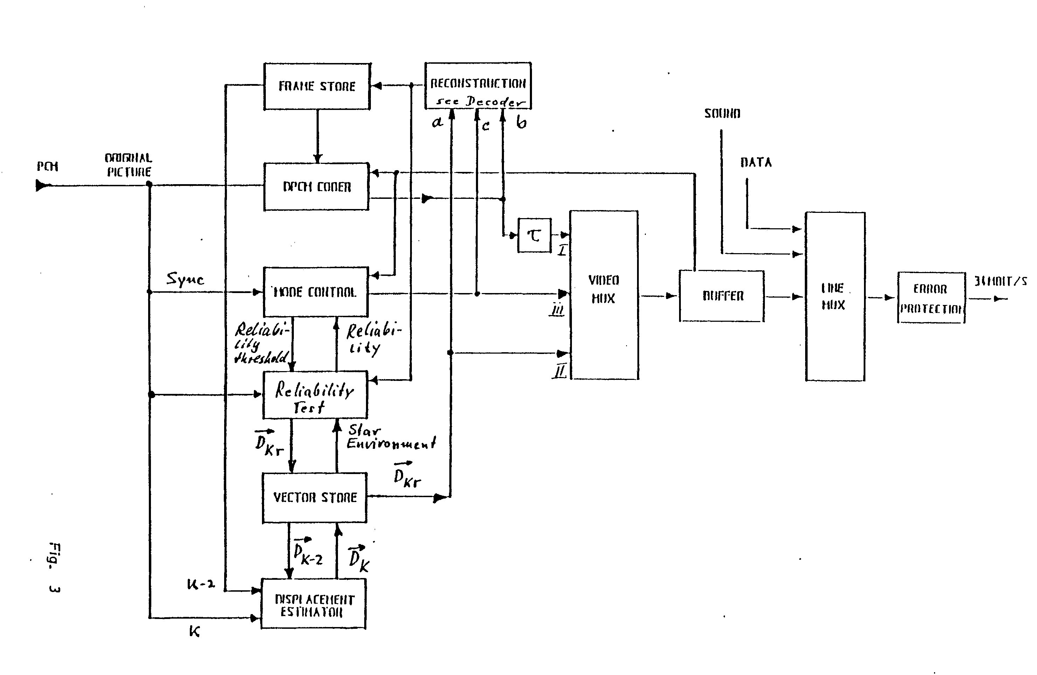

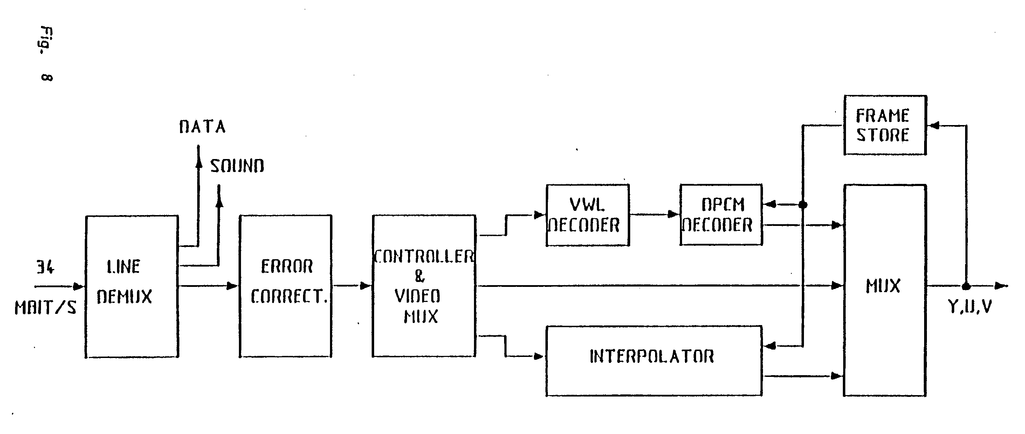

Anhand eines 34 Mbit/s-Coders (Fig. 3) und eines entsprechenden Decoders (Fig. 8) mit bewegungskompensierter Bildrekonstruktion (Motion-Compensated frame interpolation) werden die Verfahrensschritte der Erfindung im einzelnen erläutert.

Das senderseitig verfügbare Bildsignal (Original picture) liegt beispielsweise PCM codiert vor. Es wird einer Codierstufe (DPCM Coder) zugeführt zur Aufbereitung jedes zweiten Vollbildes für die Übertragung in DPCM. Der Ausgang dieser Codierstufe ist über ein Zeitverzögerungsglied $\tau$ mit einem Video-Multiplexer (Video Mux) - Eingang I - verbunden. Für die dazwischen liegenden Vollbilder wird im Normalfall; d.h. es treten keine zu stark bewegten Teilbildbereiche auf, nur ein Signal zur Übertragung an den Video-Multiplexer - Eingang II - weitergegeben, welches Informationen über die Verschiebungsvektoren enthält. Außerdem enthält der Video-Multiplexer über seinen Eingang III noch Steuersignale von einer Steuerstufe (Mode Control), welche Steuersignale für folgende Betriebsarten zur Verfügung stellt:

- alleinige Übertragung von Displacements,
- Übertragung von Displacements und bildpunktabhängige DPCM Informationen für bestimmte Blöcke,
- Buffer level Informationen.

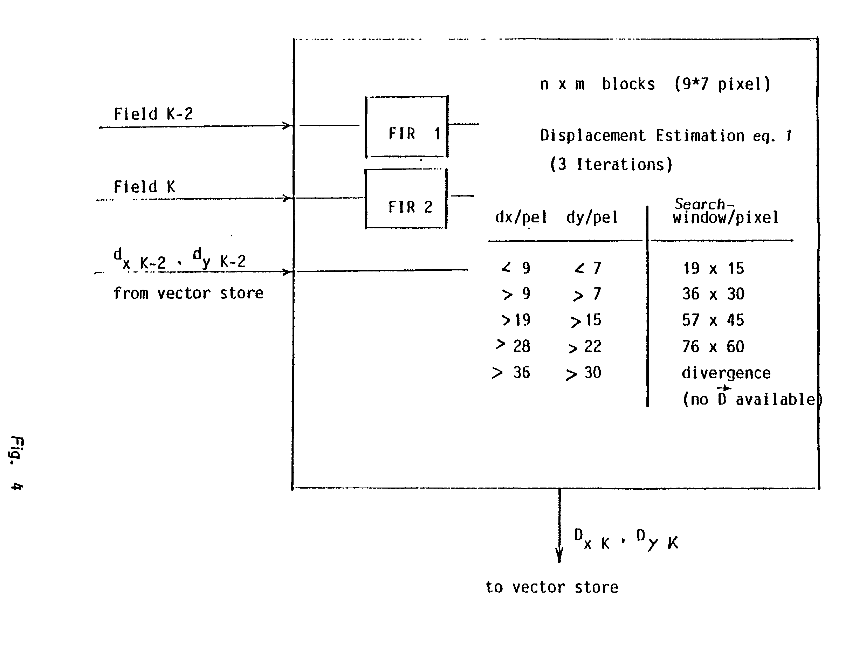

Es wird also über die Steuersignale festgelegt, welche Bildsequenzen voll in DPCM übertragen werden, welche ausgelassenen Bildsequenzen anhand von übertragenen Displacements rekonstruiert werden und für welche Teilbildbereiche, für die kein Displacement ermittelt werden kann, bildpunktabhängige DPCM-Signale für diese Teilbildbereiche in den übertragenen Datenstrom eingefügt werden. Zur Aufbereitung dieser Steuersignale wertet die Steuerstufe die Synchronimpulse (Sync) der Bildsequenzen und Displacement-Fehler aus; d.h. Unterschiede zwischen Originalblöcken und ihren aufgrund der Displacements gebildeten Rekonstruktionen. Die Displacements werden mittels eines Displacement-Schätzers (Displacement-Estimator) aus einer aktuellen Bildsequenz K und einer zuvor übertragenen und im Vollbildspeicher (Frame store) abgelegten rekonstruierten Bildsequenz K-2 ermittelt. Die Funktionsweise dieses Displacement-Schätzers, der parallel zum DPCM Coder arbeitet, wird nun in Verbindung mit Fig. 4 erläutert.

Die beiden Halbbildsequenzen K-2 und K werden jeweils vertikal vorgefiltert -Tiefpaßfilter FIR1 und FIR2 - um singuläre Zeilen zu dämpfen. Singuläre Zeilen ergeben sich aufgrund des Zeilen-Sprungverfahrens durch Unterabtastung des Bildinhaltes in vertikaler Richtung. Das hierdurch verursachte Aliasing könnte den Displacementschätzvorgang stören. Das Aliasing äußert sich in Form von einzelnen Zeilen - singuläre Zeilen -, die deutlich vom Grauwert ihrer Umgebung abweichen können. Das Bild wird durch die Tiefpaßfilterung zwar unschärfer, aber das Aliasing bei hohen Frequenzen wird mitgedämpft und die Schätzung dadurch nicht verschlechtert. Untersuchungen zeigten, daß mit FIR (Finite-impulse-response) -Filtern dritter Ordnung mit den Koeffizienten 1/4, 1/2, 1/4 eine gute Unterdrückung singulärer Zeilen zu erreichen ist.

Zur Ermittlung der Displacements; d.h. ihrer x- und y-Komponenten, wird ein aus DE-OS 34 08 016 bekanntes Verfahren angewendet. Dieses Verfahren arbeitet iterativ; d.h. das Ergebnis eines jeden Iterationsschrittes i wird als Startwert für den nächsten Schritt benutzt. Für die Komponenten des Displacements gilt:

$$dx(i) = 2 * \frac{E\left[FD * \{Sk\,Xs + Skm1\,XS\}\right]}{E\left[Sk\,Xs * Sk\,Xs + Skm1\,Xs\right]} \qquad (1a)$$

$$dy(i) = 2 * \frac{E\left[FD * \{Sk\,Ys + Skm1\,Ys\}\right]}{E\left[Sk\,Ys * \{Sk\,Ys + Skm1\,Ys\}\right]} \qquad (1b)$$

mit

| | |
|---|---|
| dx(i) | X Displacement im i. Iterationsschritt |
| dy(i) | Y Displacement im i. Iterationsschritt |
| E | Erwartungswert über ein Feld n*m |
| FD | Bild zu Bild - Differenz an der Stelle X, Y |
| Sk Xs | Ableitung in X Richtung an der Stelle X, Y in Bild K |
| Sk Ys | Ableitung in Y Richtung an der Stelle X, Y in Bild K |
| Skm1 Xs | Ableitung in X Richtung an der Stelle X, Y in Bild K minus 1 |
| Skm1 Ys | Ableitung in Y Richtung an der Stelle X, Y in Bild K minus 1. |

Man erhält nun:

$$dx = dx(i-1) + dx(i) \qquad\qquad\qquad (2)$$

$$dy = dy(i-1) + dy(i)$$

Das Verfahren wird über ein Feld mit 19 x 15 Bildpunkten (pel) mit drei Iterationsschritten i angewendet. Damit ist die Schätzung für ein dx von maximal 9 pel und ein dy von maximal 7 pel gültig, vorausgesetzt daß das Iterationsverfahren konvergiert.

Zur Verbesserung der Schätzung, insbesondere hinsichtlich geringerem Rechenaufwand und höherer Zuverlässigkeit der Displacement-Bestimmung werden die nachfolgend geschilderten Maßnahmen getroffen.

Bisher, beispielsweise beim Schätzverfahren gemäß DE-OS 34 08 016, wurde der Verschiebungsvektor für jeden Bildpunkt berechnet. Abgesehen von dem sehr hohen Rechenaufwand spart man so keine Übertragungskapazität. Statistische Untersuchungen zeigen, daß Displacements benachbarter Bildpunkte über einen großen Bereich die gleichen Werte haben. Dies läßt sich anschaulich mit der Tatsache belegen, daß Objekte eine bestimmte Ausdehnung haben müssen, um im Bild erkannt zu werden. Der Verschiebungsvektor wird in dem Verfahren für einen Block der Größe 9*7 als gültig erklärt. Durch diese Ausnutzung der Eigenschaften des Bildinhalts wird die nötige Rechenleistung um den Faktor 63 reduziert.

Wie zuvor erwähnt, wird das Verfahren iterativ angewendet und konvergiert zum Displacement. Das Verfahren kann beschleunigt werden, indem man den Verschiebungsvektor an der gleichen räumlichen Stelle aus dem zeitlich vorangegangenen Bild als Startwert für die Schätzung nimmt. Dadurch ergeben sich folgende Verbesserungen:

- Beschleunigung der Konvergenz um den Faktor 2; d.h. es ist bei gleicher Genauigkeit nur die halbe Rechenleistung erforderlich.
- Bei unscharfem Bildinhalt (z.B. schnellem Schwenk), wenn die Iteration nur unvollkommen konvergiert, bleibt der Startwert fast ungeändert bestehen. (Trägheitseffekt) Ruckeln in schnellen Bewegungen wird dadurch vermieden.

Es wird ein dynamisches Displacementschätzfenster (dynamic image window) angewendet, wobei das Schätzfenster dann vergrößert wird, wenn das im ersten Durchlauf geschätzte Displacement größer ist als die halbe Schätzfenstergröße. Der Vorgang der Vergrößerung des Displacementschätzfensters wird solange (max. 4 mal) wiederholt bis das Displacement innerhalb des Schätzfensters liegt. Fig. 4 zeigt schemtisch, welche Schätzfenstergrößen zu welchen Displacements dx und dy gehören. Durch diese Maßnahme werden auch seltene große Displacements erfaßt und richtig geschätzt. Falls die Displacementschätzung nicht konvergiert - dx > 36, dy > 30 - also kein Displacementvektor $\vec{D}$ gefunden werden kann (Divergence), wird an die Steuerstufe (Mode control) ein Signal abgegeben, bildpunktabhängige DPCM-Signale für diesen Teilbildbereich (Block) über den Video-Multiplexer (Video Mux) in den zu übertragenden Datenstrom einzufügen. Jeder ermittelte Displacementvektor $\vec{D}$ mit beispielsweise den Komponenten $D_{xK}$, $D_{yK}$ wird an einen Vektorspeicher (Vector Store) weitergegeben. Dieser Vektorspeicher dient dazu, Displacements aus Fernsehbildsequenzen, die zeitlich zuvor ermittelt wurden, z.B. aus dem Halbbild K-2, dem Displacement-Schätzer zur aktuellen Displacement-Ermittlung zur Verfügung zu stellen. Außerdem stellt der Vektorspeicher der Vertrauensprüfungsstufe (Reliability Test) nicht nur den gerade ermittelten Displacementvektor für einen Teilbildbereich (Block) zur Verfügung, sondern auch die Displacementvektoren der benachbarten Teilbildbereiche. In der Vertrauensprüfungsstufe wird die Gültigkeit eines Verschiebungsvektors innerhalb einer Viererumgebung (4 Blöcke) um den aktuellen Block durchgeführt (Star environment). Diese Anordnung sieht folgendermaßen aus:

$$x$$
$$xox \quad ,$$
$$x$$

wobei

o    den aktuellen Block und

x    Nachbarblöcke bezeichnen.

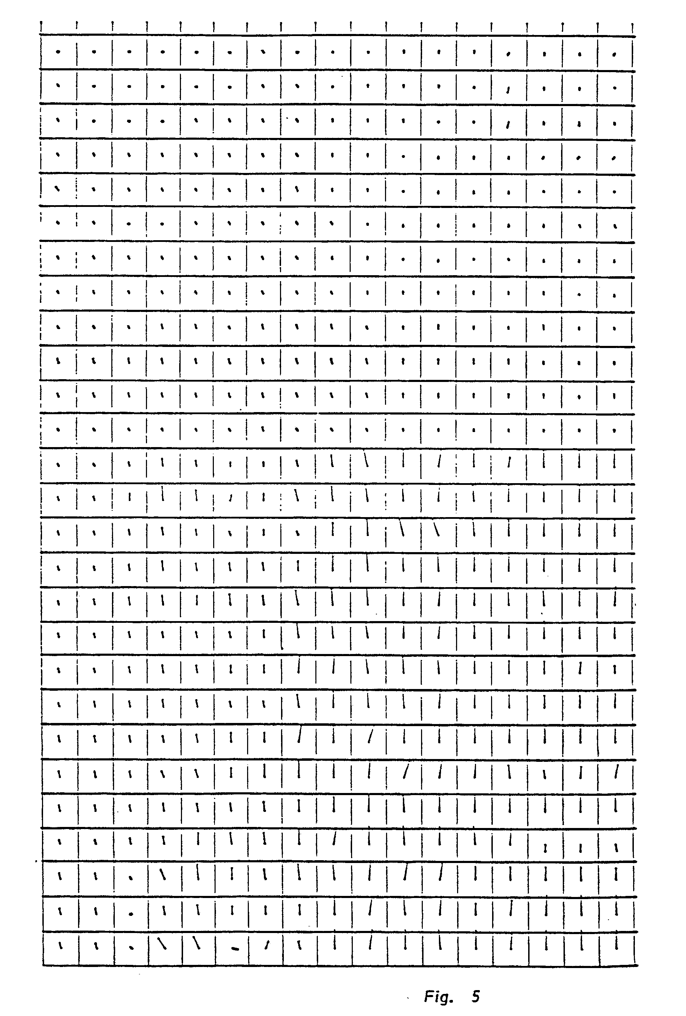

Statistische Untersuchungen haben ergeben, daß die Abweichung des Mittelwerts aus der Viererumgebung zum aktuellen Displacement in X-Richtung kleiner 2pel und in Y-Richtung kleiner 1pel ist. Dies gilt für ca. 96 % aller Displacements. Die restlichen 4 % werden als Ausreißer deklariert und durch den Mittelwert der Viererumgebung ersetzt. Der Schwellwert zur Durchführung der Vertrauensprüfung (Reliability threshold) wird von der Steuerstufe (Mode Control) zur Verfügung gestellt. Es werden also Displacementinformationen $\vec{D}$ Kr erst nach einer solchen Vertrauensprüfung an den Eingang II des Video-Multiplexers weitergegeben. Fig. 5 zeigt die Displacements für ein Feld von Teilbildbereichen (Blöcken) vor der Codierung zu DPCM-Übertragungssignalen.

Eine senderseitige Bildrekonstruktionsstufe (Reconstruction) rekonstruiert für die bei der Übertragung ausgelassenen Bildsequenzen K-1, K-1' aus den berechneten Displacement-Vektoren, die der Vertrauensprüfung unterzogen worden sind - Eingang a -, den zuvor zur Übertragung bestimmten Bildsequenzen K-2, K-2' - Eingang b - und der Steuerinformation am Ausgang der Steuerstufe (Mode Control) - Eingang c -, die bei der Übertragung ausgelassenen Fernsehbildsequenzen K-1, K-1'. Die Vertrauensprüfungsstufe vergleicht diese mit den senderseitig vorliegenden Originalsequenzen K-1, bzw. K-1'. Ergibt dieser teilbildbereichsweise vorgenommene Vergleich keine Übereinstimmung, so müssen jeweils bildpunktabhängige Informationen für die betroffenen Teilbildbereiche in den übertragenen DPCM-Datenstrom eingefügt werden. Dazu erhält der DPCM Coder über den Vollbildspeicher (Frame store) und den PCM-Eingang die notwendigen Informationen; d.h. die dort abgelegten rekonstruierten Bildpunkte der beiden letzten Halbbilder. Die senderseitige Bildrekonstruktionsstufe kann gleich aufgebaut sein wie die entsprechende Bildrekonstruktionsstufe bei der empfängerseitigen Decodierung. Ihr Aufbau wird deshalb erst bei der Beschreibung des Decoders näher erläutert. Da die im Vollbildspeicher (frame store) abgelegten DPCM Bildsequenzen im allgemeinen nahezu die gleiche Qualität wie die bei der Übertragung ausgelassenen Originalsequenzen besitzen, kann der Inhalt des Vollbildspeichers zur Displacement-Schätzung anstelle der Originalbildsequenz herangezogen werden - Wirkungslinie K-2 vom Vollbildspeicher zum Displacement-Schätzer. Ein zusätzlicher Speicher für die bei der Übertragung ausgelassenen Bildsequenzen K-1, K-1' kann daher entfallen.

Der Video-Multiplexer ist ausgangsseitig mit einem Buffer beschaltet, der die zu übertragende Datenmenge laufend überwacht und die codierten Displacements und Steuerinformationen zusammen mit den DPCM codierten Bildsignalen in einen Datenstrom mit konstanter Übertragungsrate verwandelt. Wenn der Buffer-Füllstand (Buffer level) hoch ist, wird über die Steuerstufe der Schwellwert bei der Vertrauensprüfung (reliability threshold) angehoben. Umgekehrt wird bei einem niedrigen Buffer-Füllstand dieser Schwellwert abgesenkt. Auf diese Weise wird die Anzahl der Blöcke, für die bildelementweise eine DPCM Übertragung erfolgt, zugunsten der Übertragungskapazität sparenden Übertragung von Displacement-Informationen begrenzt.

Um die Konvergenz bei der Displacement-Schätzung zu beschleunigen, wird dem Displacement-Schätzer vom Vektorspeicher ein zuvor ermitteltes Displacement $D_{K-2}$ zur Verfügung gestellt als Startwert für das neu zu ermittelnde Displacement; d.h. es wird als Anfangswert für die aktuelle Iteration von der gleichen räumlichen Stelle ausgegangen wie bei der Ermittlung des Displacements für die zeitlich vorangegangene Bildsequenz.

Wenn ein ermitteltes Displacement von der Vertrauensprüfung als nicht zuverlässig qualifiziert worden ist, wird ein "verbotenes Displacement" anstelle des ermittelten Displacements übertragen. Der empfänger-seitige Decoder interpätiert die darauf folgenden übertragenen Daten als bildpunktweise DPCM Daten für einen Block.

An den Buffer schließt sich ein Leitungsmultiplexer (Line Mux) an, der ein PCM Tonsignal (Sound) sowie einen zusätzlichen - frei definierbaren - Datenstrom hinzufügt. Nach einer Fehlerschutzschaltung (Error Protection) ist ein 34 Mbit/s-Signal zur Übertragung verfügbar.

Die DPCM-Implementierung des Coders und Decoders (Fig. 8) ist ähnlich zu einem 3:1:1 Codec für 34 Mbit/s [ PCS 86, 8.10, 1986, P. Weiss, L. Bengtsson, B. Christensson "Adaptive DPCM-Coding of Broadcast TH-Signals at 34 Mbit/s."] Da nur jedes zweite Vollbild DPCM codiert werden muß, ist die Übertragung von 4:2:2-Studiosignalen mit mehr als 2,4 Bit/pel möglich - abhängig von der Anzahl der zusätzlich übertragenen Blöcke für rekonstruierte Bilder.

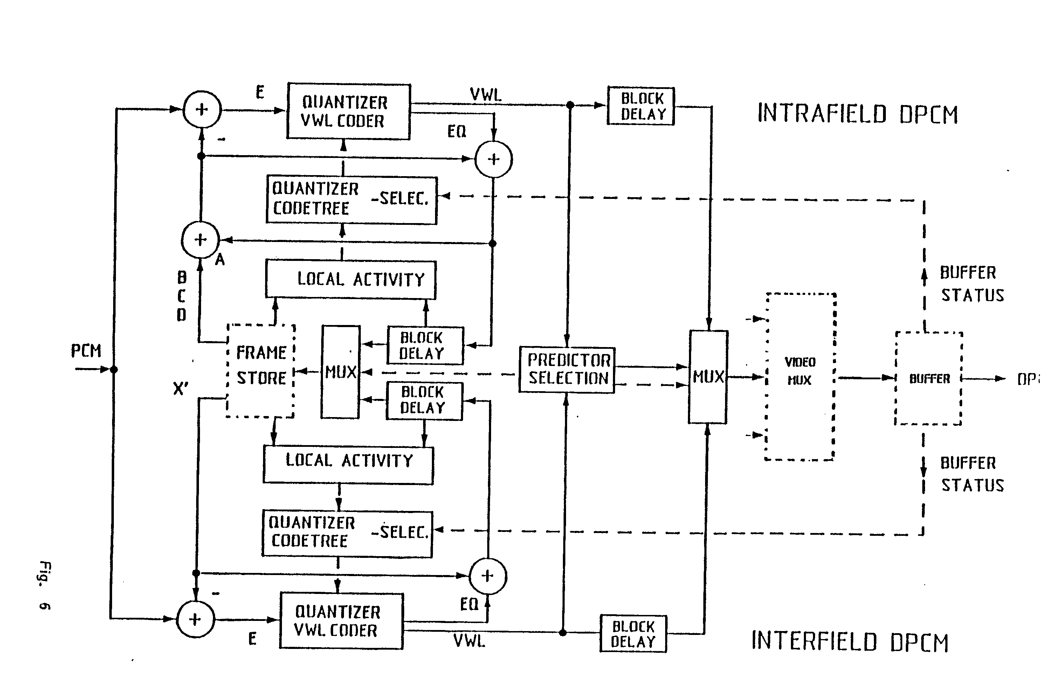

Fig. 6 zeigt ein Übersichtsblockschaltbild des DPCM-Coders, der in Fig. 3 nur schematisch dargestellt ist. Die ihn umgebenden Baugruppen gemäß Fig. 3, die in Fig. 6 ebenfalls enthalten sind, sind gestrichelt dargestellt. Es wird erfindungsgemäß eine Quellcodierung mittels adaptiver Intra-/Interframe DPCM angewendet mit nachfolgender statistischer Codierung. Die Daten des DPCM Coders werden aufsummiert mit den anderen Daten des Coders (Displacements, Steuersignale, Ton- und freie Datensignale) und dann in der Fehlerschutzschaltung gegen Übertragungsfehler um 5 % Redundanz ergänzt. Die Steuersignale des DPCM Coders werden als Zusatzinformation übertragen. Diese vorwärtsadaptive Steuerung (forward adaptive control) des Decoders bringt folgende Vorteile:

- Schutz gegen Fehlsynchronisation zwischen Coder und Decoder durch Übertragungsfehler,
- bessere Bildqualität, da die Bildrekonstruktionsfehler die Steuerung des Codec nicht beeinflussen,
- größere Flexibilität, da die Steuerinformation nicht am decoderseitigen Ende abgeleitet wird.

Um die Übertragung von Steuerinformation trotz vorwärtsadaptiver Steuerung zu gebrenzen werden folgende Maßnahmen (Fig. 6) getroffen:

- die Prädiktor-Auswahl (Predictor Selection) wird blockweise vorgenommen,
- die Quantisier-Auswahl (Quantizer Selection) wird jede dritte Zeile vorgenommen,
- die Chrominanzcodierung wird luminanzabhängig gesteuert.

Eine verbesserte Dekorrelation der Bildinformation ist durch eine adaptive Umschaltung zwischen einem Intrafield-Prädiktor für sich ändernde, und einem Interframe-Prädiktor für statische Bildbereiche zu erreichen. Der Luminanz-Coder (Fig. 6) besteht aus zwei parallel arbeitenden DPCM-Schleifen mit einem Intrafield- und einem Intraframe-Prädiktor. Nach einem Block von 9 aufeinanderfolgenden Bildpunkten wird jeweils die DPCM-Schleife mit der geringsten Datenrate ausgewählt, und zusammen mit der Prädiktor-Umschaltinformation von einem Bit zum Empfänger übertragen. Die Blockbildung ist nötig, um die zusätzliche Steuerinformation gering zu halten. Sie beträgt nur 0,055 bit/Pel bei einem Block, der 9 Luminanz- und 9 Chrominanz-Bildpunkte umfaßt.

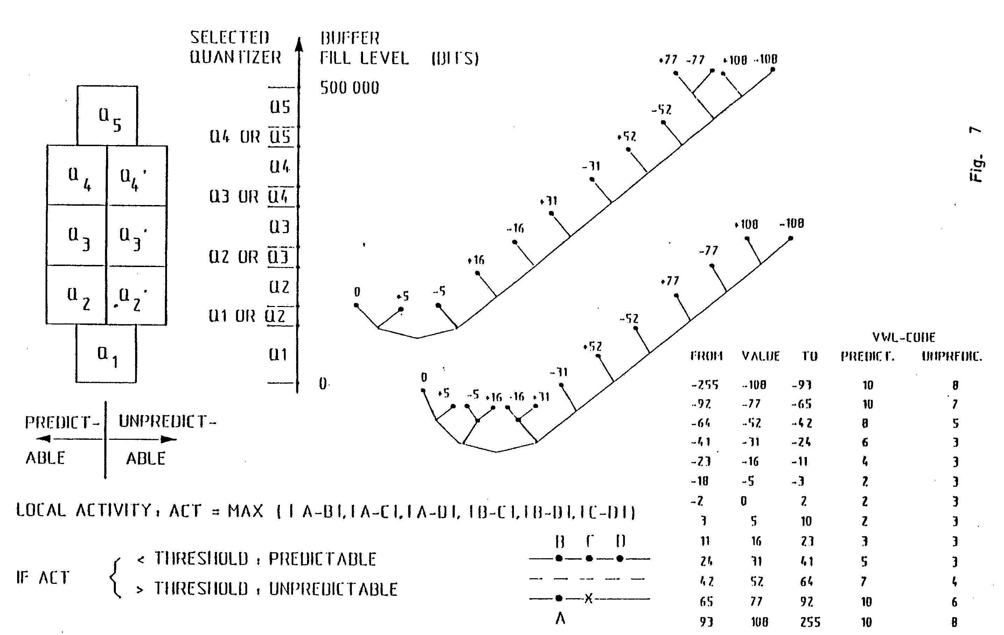

Bei der zur Verfügung stehenden Datenrate ist eine statische Codierung des Quantisierfehlers umvermeidlich. Es wird ein Huffman-Code verwendet (Fig. 7). Der Quantisierer (Quantizer) enthält 8 verschiedene Quantisierkennlinien für 5 verschiedene Bufferfüllstände (Buffer fill levels). Die feinste und die gröbste Kennlinie soll einen Über/Unterlauf des Bufferspeichers sicher verhindern. Die mittleren Kennlinien werden im Normalbetrieb verwendet und sind jeweils in 2 Versionen für verschiedene örtliche Bildaktivitäten (local activity) vorhanden. Zur Feststellung einer örtlichen Bildaktivität werden -wie in Fig. 7 dargestellt - drei benachbarte Bildpunkte B, C, D einer Zeile und ein Bildpunkt A einer Nachbarzeile eines Halbbildes nach der Beziehung:

$$ACT \text{ (local activity)} = MAX(|A-B|,|A-C|,|A-D|,|B-C|,|B-D|,|C-D|),$$

ausgewertet.

Wenn ACT < festgelegter Schwellwert ist eine Prädiktion möglich,

wenn ACT > festgelegter Schwellwert ist keine Prädiktion möglich.

Die Quantisierer enthalten jeweils einen VWL (variable word length) Coder mit einer Codierungsvereinbarung gemäß Fig. 7.

Die Koeffizienten für die Prädiktoren setzen ich aus den Bildpunkten A, B, C, D und X′ (Mittelwert von

interpolierten Bildpunkten) wie folgt zusammen:

$$Intrafield\text{-}Pr\ddot{a}dikator \stackrel{\wedge}{=} 1/2 *A + 1/8 * B + 1/4*C + 1/8*D$$
$$Interframe\text{-}Pr\ddot{a}dikator \stackrel{\wedge}{=} 1*X' \quad .$$

Die Auswahl der Kennlinie in Abhängigkeit von der Aktivität erfolgt bildpunktweise. Da die Prädiktion in aktiven Bildbereichen weniger zuverläßig ist, haben die entsprechenden Quantisierungskennlinien einen weniger stark differenzierten Codebaum (Codetree) und eine gröbere Stufung. Die Adaption der Codebäume wird durch die örtliche Bildaktivität gesteuert und wird bildelementweise vorgenommen.

Der Chrominanz-Coder (nicht dargestellt) wird vom Luminanz-Coder (Fig. 6) luminanzadaptiv gesteuert. Er enthält nur eine DPCM-Schleife mit zwei Prädiktoren, die vom Luminanz-Coder umgeschaltet werden. Da die Wahrscheinlichkeit für Nullfolgen aufgrund der geringen Entropie der Chrominanz-Komponenten relativ groß ist, wird zusätzlich eine Run-Length-Codierung für längere Nullfolgen verwendet.

Fig. 8 zeigt ein Prinzipschaltbild für den empfängerseitigen Decoder. Der Leitungsdemultiplexer (Line Demux), an den sich die Fehlerkorrektorstufe (Error correction) anschließt, spaltet den 34 Mbit/s Datenstrom in die Video-, Ton- und Datenkanäle auf. Der Video-Demultiplexer (Video Mux) trennt die DPCM Daten von den Informationen über die Displacements und den Steuerinformationen.

Der DPCM-Datenstrom wird im DPCM-Decoder mit nachgeschaltetem Vollbildspeicher (Frame store), die Displacements im Displacement-Interpolator und die Steuerinformationen in der Steuerstufe (controller) weiterverarbeitet. Die Steuerstufe steuert sowohl den Vollbildspeicher (Frame store) über den Multiplexer (Mux) als auch den Displacement-Interpolator. Über den Multiplexer (Mux) werden beide Zweige für die Bildwiedergabe vereinigt. Im Decoder wird das DPCM-Bild k-2 rekonstruiert und gespeichert. Bild k-1 wird aus k-2 mit den übertragenen Displacements und einem FIR-Interpolationsfilter (2-DIM FIR), welcher Bestandteil des Interpolators ist, hergestellt. Die Steuerinformation wird ausgewertet, und die übertragenen Blöcke werden eingesetzt. Die PCM-Tondaten werden in ein Analogsignal (Sound) zurückverwandelt.

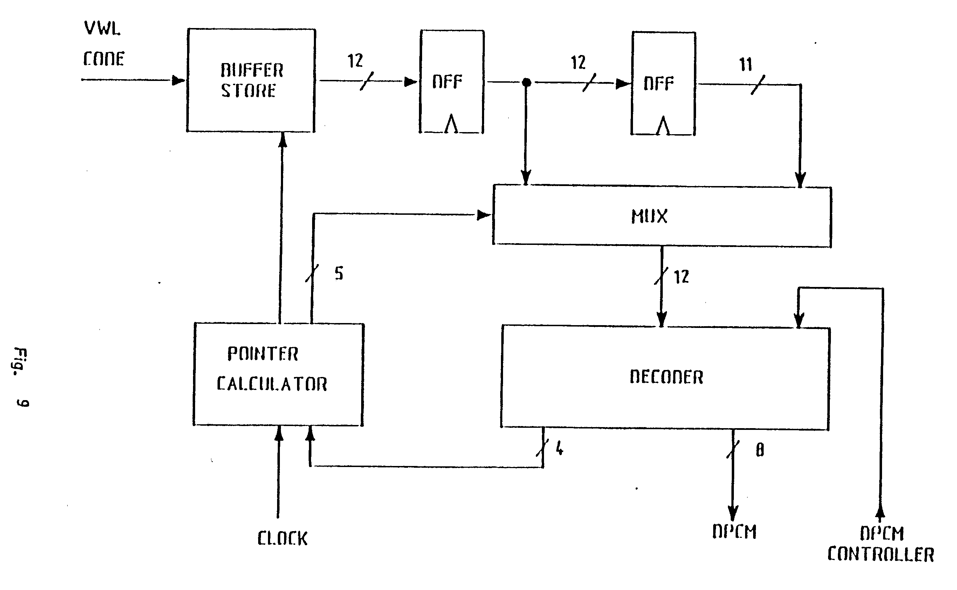

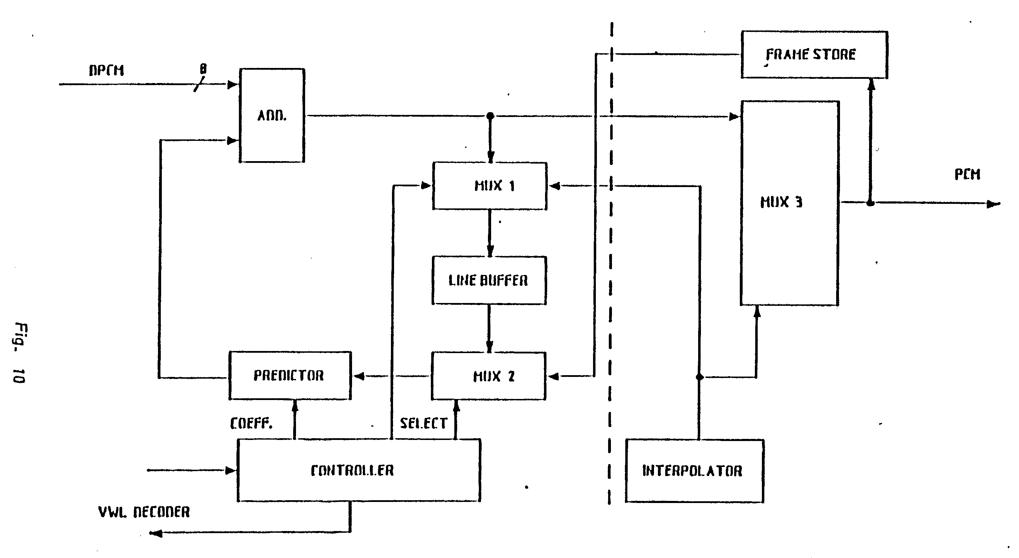

Der DPCM-Decoder besteht jeweils aus einer DPCM-Schleife für den Luminanz-und den Chrominanzanteil. Vor dem DPCM-Decoder ist ein VWL-Decoder angeordnet. Der VWL-Decoder, dessen Struktur in Fig. 9 dargestellt ist, liefert Datenworte konstanter Wortlänge. Die VWL-Decodierung impliziert einen nicht gleichförmigen Datenfluß, der durch einen externen Pufferspeicher (Buffer Store) geglättet wird. Der Pufferspeicher weist erheblich mehr Speicherkapazität auf als der korrespondierende Buffer des Coders, da eine Verbindung zum Lese-Pointer des Decoder-Buffers in Abhängigkeit vom Schreib-Pointer hergestellt werden muß zur Verhinderung des Außertrittfallens des Lese-Pointers, wenn coderseitig Feinquantisierungen zum Füllen des Buffers abgegeben werden. Über zwei Delay-Flip-Flops (DFF) ist der Ausgang des Pufferspeichers mit einem Multiplexer (Mux) verbunden. Innerhalb einer Clock-Periode bringt dieser Multiplexer das VWL Codewort in die richtige Position zur Verarbeitung durch einen aus dem Stand der Technik bekannten Decoder. Diesem Decoder wird ein DPCM Steuersignal vom DPCM Decoder (Fig. 10) zugeführt. Neben dem 8 Bit breiten DPCM Ausgangssignal gibt der Decoder ein 4 Bit breites Signal an den Pointer Rechner (Pointer Calculator) weiter, der einen Ausgang zur Steuerung des Pufferspeichers und einen Ausgang zur Steuerung des Multiplexers aufweist.

Der DPCM-Decoder (Fig. 10) für den Luminanzanteil rekonstruiert die PCM Signale von bildpunktweise in DPCM übertragenen Blöcken. Die Prädiktionswerte werden durch einen Prädiktor (Predictor), der über ein Steuerwerk (Controller) gesteuert wird, und eine Addierstufe (Add.) gebildet. Die Koeffizientenwertigkeit (Coeff.) wird vom Steuerwerk bereitgestellt. Der Multiplexer Mux1 wird folgendermaßen benutzt: Während der Übertragung von DPCM Bildsequenzen ist dieser Multiplexer ständig zu den gerade rekonstruierten Bildpunkten durchgeschaltet. Zur Rekonstruktion DPCM übertragener Blöcke innerhalb der interpolierten Bildsequenzen ist der Multiplexer Mux1 zum Interpolator an den Blockkanten durchgeschaltet. Der Multiplexer Mux2 ermöglicht den Zugriff zu Daten für eine zweidimensionale Prädiktion; d.h. Prädiktion aus nur einer Bildsequenz (Halbbild), mittels des Line-Buffers oder einer dreidimensionalen Prädiktion; d.h. Prädiktion aus zwei Bildsequenzen (Halbbildern) mittels des Inhalts des Vollbildspeichers (Frame Store). Die Auswahl der Multiplexer Mux1 und Mux2 erfolgt durch ein Select-Kommando des Steuerwerkes.

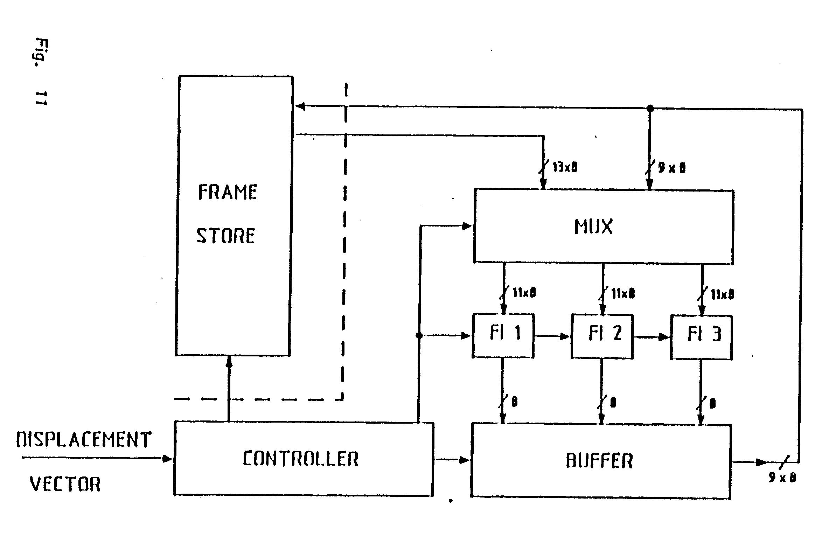

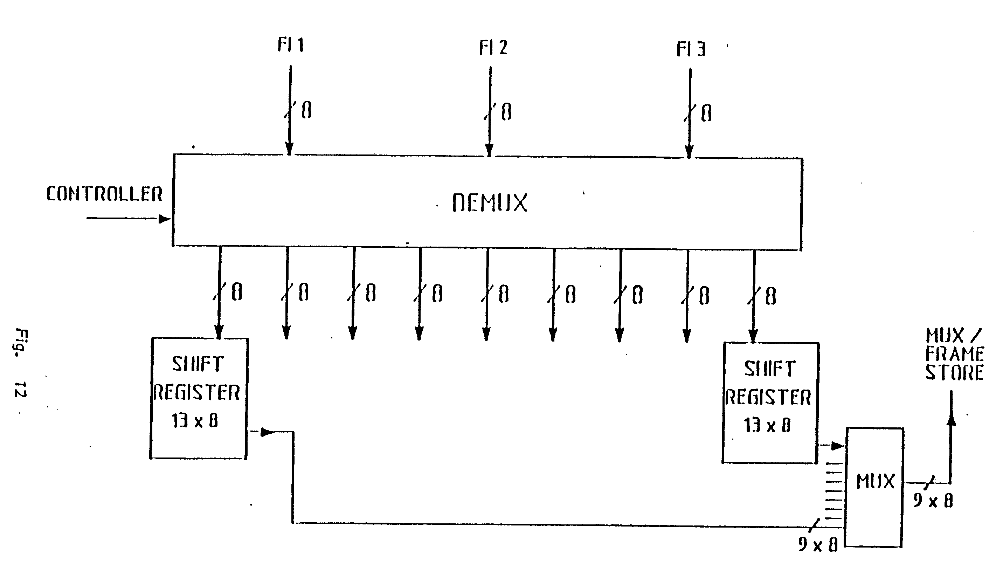

Der in Fig. 8 angeführte Displacement-Interpolator ist in Fig. 11 in Einzelbaugruppen dargestellt. Die Komplexität der Interpolation ist in der benötigten Überabtastung begründet zur exakten Rekonstruktion von Blöcken mit nichtganzzahligen Displacements. Würden nichtganzzahlige Displacements mit einer einfachen parabolischen Interpolation 1. Ordnung realisiert, würde eine deutliche Abnahme der Bildschärfe auftreten, wie sie für HQTV nicht toleriert werden kann. Nichtganzzahlige Displacements werden deshalb durch ein beispielsweise 77 poliges FIR-Filter interpoliert, das Überabtastfaktoren von 8 für die x-Richtung und 16 für

EP 0 279 053 B1

die y-Richtung ermöglicht. Der ganzzahlige Teil des Displacements wird für jeden Block mittels eines Steuerwerkes (Controller) durch Errechnen der Adresse ermittelt. Für die Echtzeitverarbeitung werden drei parallel arbeitende Filter FI1, FI2 und FI3 verwendet. Zuerst wird ein Block in x-Richtung verschoben. Das Ergebnis wird im Buffer abgelegt. Zur Verschiebung des Blocks in y-Richtung wird das gleiche Filter im Zeitmultiplexbetrieb verwendet. Der in Fig. 11 angeführte Interpolation-Buffer ist in Fig. 12 im Detail dargestellt. Er besteht im wesentlichen aus 9 Schieberegistern mit einer Wortbreite von 8 Bits und einer Tiefe von 13 Stufen. Nach der Verarbeitung in x-Richtung enthält jedes Schieberegister eine Spalte des verarbeiteten Blocks. Das Displacement in y-Richtung wird nun Spalte für Spalte berechnet.

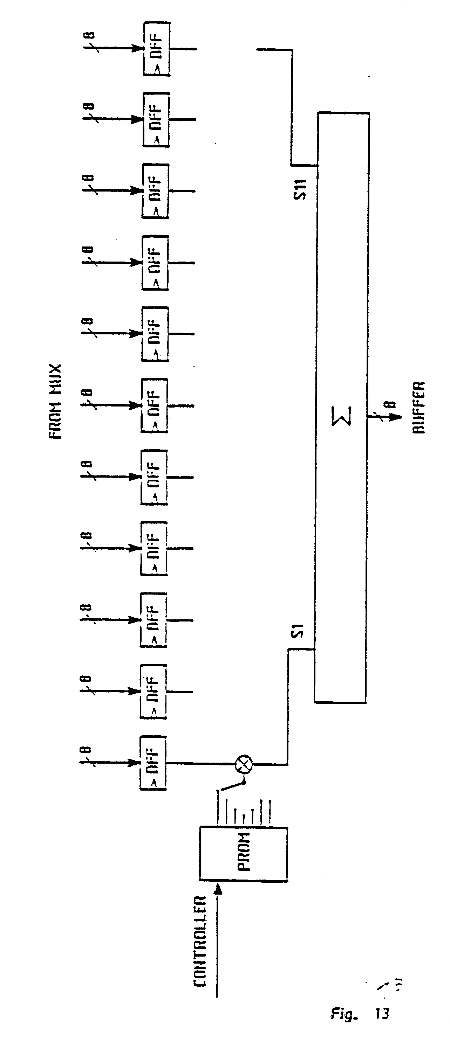

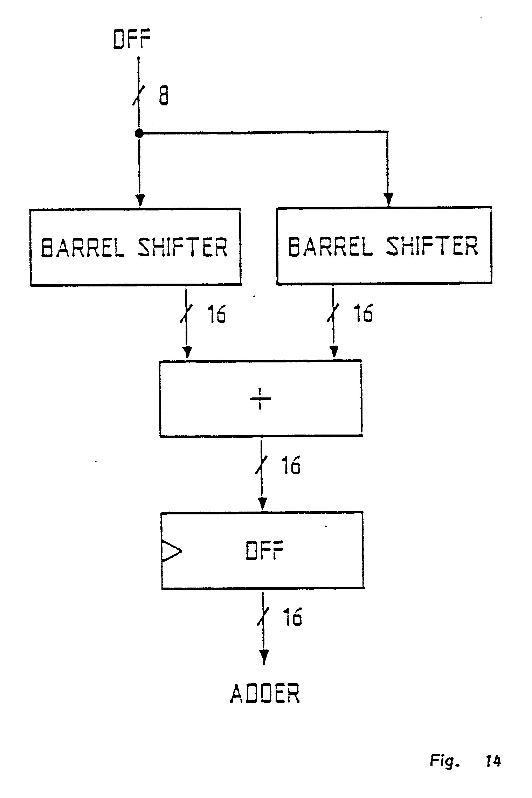

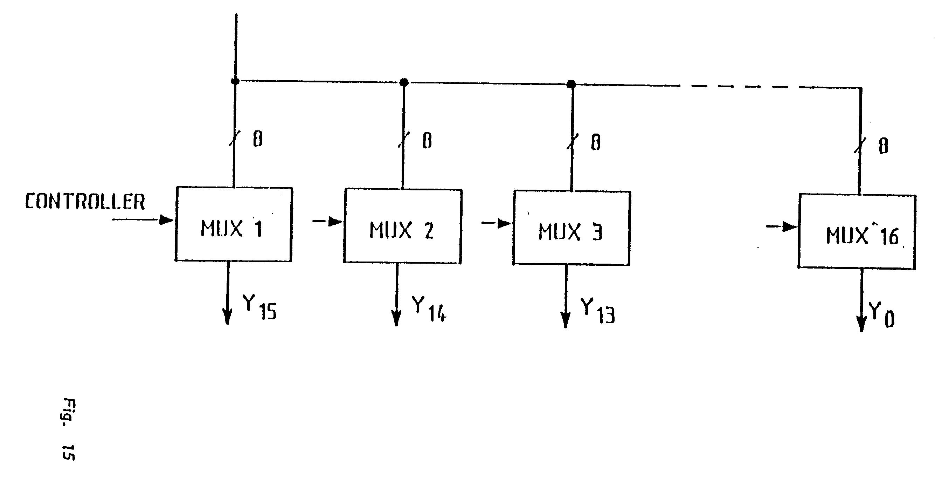

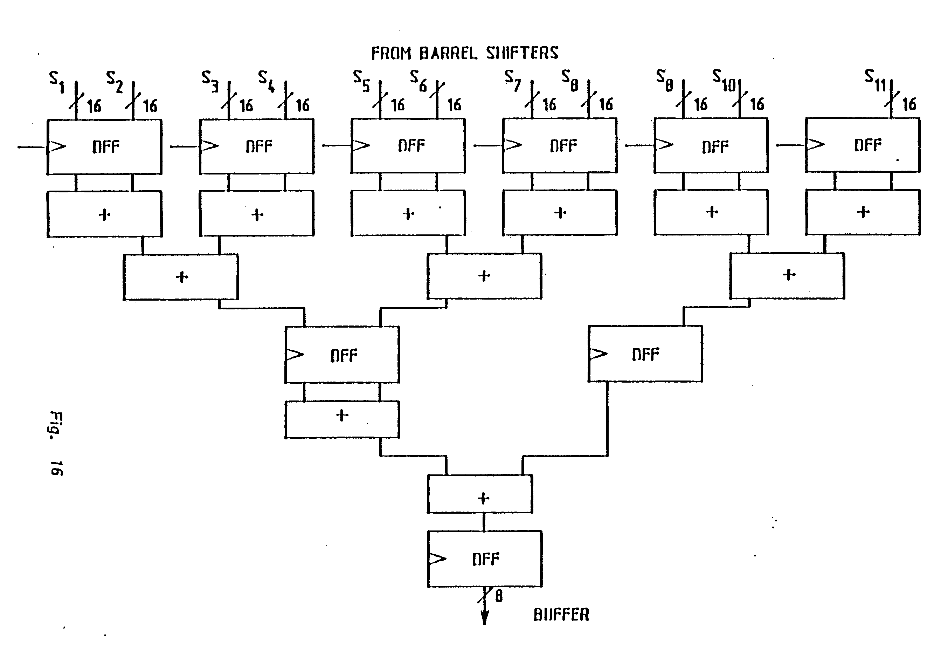

Die Figuren 13, 14, 15 und 16 zeigen Strukturelemente des Interpolationsfilters mit Überabtastung. Die Datenströme vom Buffer-Demux. (Fig. 12) werden über Delay-Flip-Flops (DFF) und vom Steuerwerk über PROM gesteuerte Multiplizierer zu einem Summierer mit den Eingängen S1 bis S11 geführt (Fig. 13). Wegen der relativ großen Zahl von Filter-Koeffizienten ist zur Reduzierung des Schaltungsaufwandes eine vereinfachte Multiplizierstruktur (Fig. 14) gewählt. Die Multiplizierer (Fig. 14) bestehen jeweils aus zwei Barrel-Shiftern, deren Ausgangsdaten addiert werden und an Delay-Flip-Flops weitergeführt werden. Den Aufbau der Barrel-Shifter zeigt Fig. 15. Ihre Aufgabe ist, das 8 Bit breite Datenwort um bis zu 8 Plätze nach rechts zu schieben. Die Platzverschiebung wird vom Steuerwerk in Abhängigkeit der Filter-Koeffizienten vorgenommen. Die Ausgangssignale der Multiplizierer werden aufsummiert in einem Pipeline-strukturierten Addierer (Fig. 16).

Die Fernsehbildsignalcodierung mit bewegungskompensierter Vollbildinterpolation (Motion compensated frame interpolation - MCFI) und Übertragung von Verschiebungsvektoren (Displacements) kann auf mehrere Arten modifiziert und evtl. verbessert werden. MCFI kann mit allen Quellcodierungsverfahren, wie beispielsweise:

- Prädiktive Codierung,
- Transformationscodierung,
- Interpolative Codierung,
- Statistische Codierung, z.B. Huffmann-Codierung,

kombiniert werden.

Die Erfindung wurde in inem Ausführungsbeispiel anhand der DPCM-Codierung mit Intrafield-/Interframe-Prädiktion vorgestellt. Im Coder ist der Displacement-Schätzer jedoch inhärent. Es ist daher möglich, statische Interframe-Prädiktion durch bewegungskompensierte Interframe-Prädiktion zu ersetzen. Diese Kombination führt zu einer besseren Korrelation. Der Nachteil dieses Verfahrens liegt darin, daß die Verschiebungsvektoren in DPCM codierten Bild-Sequenzen als Zusatzinformation übertragen werden müssen. Eine weitere Möglichkeit ist der Austausch der DPCM-Codierung durch eine DCT (Discrete-Cosine-Transform) -Codierung.

Eine Verbesserung liegt in der Displacement-Schätzung als zeitlicher Prädiktion und der DCT zur Codierung des Prädiktionsfehlers. Bei dieser Kombination können alle Berechnungen parallel ausgeführt werden. Dies ist eine wichtige Eigenschaft für HDTV Übertragungscodierung bei einer Kanalbitrate von 140 Mbit/s.

**Ansprüche**

1.  Verfahren zum Übertragen von Fernsehbildsequenzen mittels eines Datenstromes über einen Übertragungskanal mit begrenzter Übertragungskapazität sowie zum Wiedergeben der Fernsehbildsequenzen, wobei senderseitig vorhandene Fernsehbildsequenzen teilweise beim Übertragen ausgelassen werden, und wobei empfängerseitig eine Rekonstruktion einer beim Übertragen ausgelassenen Fernsehbildsequenz vorgenommen wird, dadurch gekennzeichnet , daß die empfängerseitige Rekonstruktion einer ausgelassenen Fernsehbildsequenz aus einer zuvor übertragenen Fernsehbildsequenz und einem übertragenen Signal erfolgt, das eine Information über die Verschiebung eines Teilbildbereiches zwischen einer übertragenen und einer ausgelassenen Fernsehbildsequenz enthält, daß bei Teilbildbereichen, für die der senderseitige Vergleich zwischen ausgelassener Fernsehbildsequenz und aufgrund der Information über die Verschiebung gebildeter Fernsehbildsequenz keine Übereinstimmung ergibt, kein Signal mit der Information über eine Verschiebung eines Teilbildbereiches übertragen wird, sondern jeweils bildpunktabhängige Informationen für diesen Teilbildbereich in den übertragenen Datenstrom eingefügt werden.

2.  Verfahren nach Anspruch 1, dadurch gekennzeichnet , daß die Information über die Verschiebung eines

8

EP 0 279 053 B1

Teilbildbereiches jeweils durch einen Verschiebungsvektor (Displacement) beschrieben wird, der die Bewegungsrichtung des jeweiligen Teilbildbereiches angibt.

3. Verfahren nach Anspruch 2, dadurch gekennzeicnet , daß die Verschiebungsvektoren iterativ geschätzt werden; d.h. das Ergebnis eines jeden Iterationsschrittes wird als Startwert für den nächsten Schritt benutzt.

4. Verfahren nach Anspruch 3, dadurch gekennzeichnet , daß bei jedem Iterationsschritt für die Bestimmung eines Verschiebungsvektors von der gleichen räumlichen Stelle der zeitlich vorangegangenen Fernsehbildsequenz als Startwert ausgegangen wird.

5. Verfahren nach einem der Ansprüche 2 bis 4, dadurch gekennzeichnet , daß die Gültigkeit eines aktuellen Verschiebungsvektors eines Teilbildbereiches innerhalb einer Nachbarschaft von Teilbildbereichen überprüft wird, und daß bei Abweichung des aktuellen Verschiebungsvektors von den Verschiebungsvektoren der benachbarten Teilbildbereiche dieser durch den Mittelwert der Verschiebungsvektoren der benachbarten Teilbildbereiche ersetzt wird.

6. Verfahren nach einem der Ansprüche 3 bis 5, dadurch gekennzeichnet , daß ein dynamisches Schätzfenster zur Bestimmung der Verschiebungsvektoren angewendet wird, daß dieses Schätzfenster dann verdoppelt wird, wenn der Betrag des im ersten Iterationsschritt ermittelten Verschiebungsvektors größer ist als die Hälfte des Betrages der Schätzfensterabmessungen, und daß diese Schätzfenstervergrößerung so lange wiederholt wird bis der Verschiebungsvektor innerhalb des Schätzfensters liegt.

7. Verfahren nach einem der Ansprüche 1 bis 6, dadurch gekennzeichnet , daß nicht ganzzahlige Verschiebungsvektoren, die bei digitaler Wichtung für die Übertragung entstehen, durch ein vielpoliges FIR (finite-impulse-response) -Filter, das Überabtastfaktoren höher Ordnung zuläßt, interpoliert werden.

8. Verfahren nach einem der Ansprüche 3 bis 7, dadurch gekennzeichnet , daß singuläre Zeilen, die beim Zeilensprungverfahren durch Unterabtastung des Bildinhaltes in vertikaler Richtung entstehen, vor der iterativen Schätzung der Verschiebungsvektoren durch Tiefpaßfilterung gedämpft werden.

9. Verfahren nach einem der Ansprüche 1 bis 8, dadurch gekennzeichnet , daß die übertragenen Fernsehbildsequenzen senderseitig digital quellcodiert werden und empfängerseitig entsprechend decodiert werden.

10. Verfahren nach Anspruch 9, gekennzeichnet durch eine prädiktive Codierung/Decodierung.

11. Verfahren nach Anspruch 9, gekennzeichnet durch eine Transformationscodierung/-decodierung, beispielsweise eine DCT (Discrete Cosinus-Transformation).

12. Verfahren nach Anspruch 9, gekennzeichnet durch eine interpolative Codierung/Decodierung.

13. Verfahren nach Anspruch 9, gekennzeichnet durch eine statistische Codierung/Decodierung, beispielsweise eine Hufmann-Codierung/Decodierung.

14. Verfahren nach Anspruch 9, gekennzeichnet durch gleichzeitiges Anwendung mindestens zweier Maßnahmen gemäß den Ansprüchen 10 bis 13.


**Claims**

1. Method for the transmission of television image sequences by means of a data stream by way of a transmission channel of limited transmission capacity as well as for the reproduction of the television image sequences, wherein television image sequences present at the transmission end are omitted partially during the transmission and wherein a reconstruction of a television image sequence omitted during the transmission is undertaken at the reception end, characterised thereby, that the reconstruction of an omitted television image sequence at the reception end takes place out of a previously transmitted television image sequence and a transmitted signal which contains information about the

9

displacement of a partial image region between a transmitted television image sequence and an omitted television image sequence, that for partial image regions, for which the comparison at the transmission end between the omitted television image sequence and the television image sequence formed on the basis of the information about the displacement results in no agreement, no signal with the information about a displacement of a partial image region is transmitted, but information data, which are dependent on image dot, for this partial image region are inserted each time into the transmitted data stream.

2. Method according to claim 1, characterised thereby, that the information about the displacement of a partial image region is described each time by a displacement vector (displacement), which indicates the direction of movement of the respective partial image region.

3. Method according to claim 2, characterised thereby, that the displacement vectors are estimated iteratively, i.e. the result of each iteration step is used as starting value for the next step.

4. Method according to claim 3, characterised thereby, that for each iteration step for the determination of a displacement vector, the same spatial place of the television image sequence preceding in time is proceeded from as starting value.

5. Method according to one of the claims 2 to 4, characterised thereby that the validity of an actual displacement vector of a partial image region is checked within a neighbourhood of partial image regions and that, on a deviation of the actual displacement vector from the displacement vectors of the neighbouring partial image regions, this is replaced by the mean value of the displacement vectors of the neighbouring partial image regions.

6. Method according to one of the claims 3 to 5, characterised thereby, that a dynamic estimation window is used for the determination of the displacement vectors, that this estimation window is doubled when the magnitude of the displacement vector determined in the first iteration step is greater than half the magnitude of estimation window dimensions and that this estimation window enlargement is repeated until the displacement vector lies within the estimation window.

7. Method according to one of the claims 1 to 6, characterised thereby, that non-integral displacement vectors, which arise during digital weighting for the transmission, are interpolated by a multipole finite pulse response filter which permits over-scanning factors of higher order.

8. Method according to one of the claims 3 to 7, characterised thereby, that singular lines, which arise in interlacing through under-scanning of the image content in vertical direction, are attenuated by low-pass filtering before the iterative estimation of the displacement vectors.

9. Method according to one of the claims 1 to 8, characterised thereby, that the transmitted television image sequences are digitally source-coded at the transmission end and decoded correspondingly at the reception end.

10. Method according to claim 9, characterised by a predictive coding/decoding.

11. Method according to claim 9, characterised by a transformation coding/decoding, for example a discrete cosine transformation.

12. Method according to claim 9, characterised by an interpolative coding/decoding.

13. Method according to claim 9, characterised by a statistical coding/decoding, for example a Hufmann coding/decoding.

14. Method according to claim 9, characterised by simultaneous application of at least two measures according to the claims 10 to 13.

**Revendications**

1. Procédé de transmission d'images de télévision sous la forme d'un flux de données sur une voie de transmission à capacité limitée et de reproduction des images de télévision, où certaines images sont sautées à l'émission et sont reconstituées à la réception, caractérisé en ce que la reconstruction à la réception d'une image sautée se fait à partir d'une image transmise antérieurement et d'un signal transmis contenant une information sur le déplacement d'un bloc de l'image entre une image transmise et une image sautée, en ce que, dans le cas des blocs de l'image pour lesquels la comparaison à l'émission entre l'image sautée et l'image reconstituée à partir des informations de déplacement ne donne pas de concordance, on ne transmet pas un signal avec l'information de déplacement d'un bloc, mais des informations sur les points d'image de ce bloc qui sont insérées dans le flux de données.

2. Procédé selon la revendication 1, caractérisé en ce que l'information sur le déplacement d'un bloc est décrit par un vecteur de déplacement qui exprime la direction du déplacement du bloc considéré.

3. Procédé selon la revendication 2, caractérisé en ce que les vecteurs de déplacement sont estimés itérativement, c'est-à-dire que le résultat d'un pas d'itération est utilisé comme valeur de départ pour le pas suivant.

4. Procédé selon la revendication 3, caractérisé en ce que, à chaque pas d'itération effectué pour déterminer un vecteur de déplacement, on part du même endroit dans l'espace dans l'image précédente.

5. Procédé selon l'une des revendications 2 à 4, caractérisé en ce que la validité du vecteur de déplacement courant d'un bloc d'image est vérifiée par rapport aux blocs voisins et en ce que, en cas de divergence entre le vecteur de déplacement courant et les vecteurs de déplacement des blocs adjacents, le premier est remplacé par la moyenne des vecteurs de déplacement des blocs voisins.

6. Procédé selon l'une des revendications 3 à 5, caractérisé en ce qu'une fenêtre d'analyse dynamique est utilisée pour déterminer les vecteurs de déplacement, en ce que cette fenêtre est doublée lorsque la valeur du vecteur de déplacement determinée dans le premier pas d'itération est supérieure à la moitié des dimensions de la fenêtre, et en ce que cet agrandissement de la fenêtre d'analyse est répété jusqu'à ce que le vecteur de déplacement soit inscrit dans la fenêtre.

7. Procédé selon l'une des revendications 1 à 6, caractérisé en ce que des vecteurs de déplacement non entiers produits lors de la pondération numérique pour la transmission sont interpolés par un filtre FIR (filtre à mémoire finie) multipolaire permettant des facteurs de suréchantillonnage d'ordre élevé.

8. Procédé selon l'une des revendications 3 à 7, caractérisé en ce que les lignes aberrantes, produites dans l'échantillonnage entrelacé par un sous-échantillonnage du contenu de l'image dans la direction verticale, sont atténuées par un filtre passe-bas avant la génération itérative des vecteurs de déplacement.

9. Procédé selon l'une des revendications 1 à 8, caractérise en ce que les images de télévision transmises sont codées numériquement à la source au niveau de l'émetteur et décodées en conséquence au niveau du récepteur.

10. Procédé selon la revendication 9, caractérisé par un codage/décodage prédictif.

11. Procédé selon la revendication 9, caractérisé par un codage/décodage par transformation, par exemple par transformation DCT (Discrete Cosine Transformation).

12. Procédé selon la revendication 9, caractérisé par un codage/décodage interpolatif.

13. Procédé selon la revendication 9, caractérisé par un codage/décodage statistique, par exemple par un codage/décodage de Huffmann.

14. Procédé selon la revendication 9, caractérisé par une utilisation simultanée d'au noins deux des mesures selon les revendications 10 à 13.

Fig. 1

TRANSMITTED
FIELD

dx

dy

x K-2

SKIPPED
FIELD

X

FIXED BLOCKS

K-2

K-2'

K-1

t

BLOCK SIZE : 9 x 7
SEARCH WINDOW : 19 x 15

Fig. 2

Fig. 3

Field K-2

Field K

$d_{x\ K-2}$ , $d_{y\ K-2}$

from vector store

FIR 1

FIR 2

n x m  blocks  (9*7 pixel)

Displacement Estimation eq. 1

(3 Iterations)

| dx/pel | dy/pel | Search-window/pixel |
|--------|--------|---------------------|
| < 9 | < 7 | 19 x 15 |
| > 9 | > 7 | 36 x 30 |
| >19 | >15 | 57 x 45 |
| > 28 | > 22 | 76 x 60 |
| > 36 | > 30 | divergence (no $\vec{D}$ available) |

$D_{x\ K}$ , $D_{y\ K}$

to vector store

Fig. 4

EP 0 279 053 B1

Fig. 5

16

Fig. 6

Fig. 7

Fig. 8

DATA

SOUND

34
MBIT/S

LINE
DEMUX

ERROR
CORRECT.

CONTROLLER
&
VIDEO
MUX

VWL
DECODER

DPCM
DECODER

INTERPOLATOR

FRAME
STORE

MUX

Y,U,V

Fig. 9

Fig. 10

EP 0 279 053 B1

Fig. 11

22

Fig. 12

Fig. 13

DFF

$\times$ 8

| BARREL SHIFTER | BARREL SHIFTER |

$\times$ 16    $\times$ 16

| + |

$\times$ 16

| DFF |

$\times$ 16

ADDER

*Fig.* 14

Fig. 15

FROM BARREL SHIFTERS

Fig. 16

EP 0 279 053 B1